# EUROPEAN PATENT SPECIFICATION

(11) **EP 2 198 755 B1**
(45) Date of publication and mention of the grant of the patent: **13.06.2012**
(21) Application number: 08254054.3
(22) Date of filing: 18.12.2008
(51) Int. Cl.: A47J 19/02

(54) **Juicer**
Entsafter
Centrifugeuse

(43) Date of publication of application: 23.06.2010
(73) Proprietor: ELECTRICAL INVESTMENTS LIMITED, Tortola (VG)
(72) Inventor: Cheung, Shu Wan, Tortola (VG); Cheung, Shu Sang, Hong Kong (CN); Pang, To Yin, Hong Kong (CN)
(74) Representative: Walker, Ross Thomson

(56) References cited:
- WO-A-2008/146231
- CH-A- 377 495
- DE-B- 1 093 058
- US-A1- 2006 011 760
- US-B1- 6 742 447

## Description

The present invention relates to a juicer, and in particular to an improved design of the grating disk which enables the processing of fruit of vegetables with improved efficiency, durability and safety.

At present, there are three main types of juicer, namely centrifugal juicers, which utilises blades and spikes to macerate the flesh of the fruit or vegetable and a sieve or filter mesh, to strain off the juice; masticating juicers that chew the fruit or vegetable into a pulp before squeezing the pulp to extract the juice; and triturating juicers that have twin gears to first crush the fruit or vegetables and then press the resulting pulp to extract the juice.

Centrifugal juicers, in particular, extract juice from fruit or vegetables by pressing the fruit or vegetables firmly against a spinning grating disk, which rapidly macerates the flesh of the fruit or vegetable to produce a combination of pulp and juice, which are separated by means of a filter mesh and the juice obtained is collected, whilst the pulp is retained and disposed of.

US 2006/011760 discloses a mixer blade for a juicer.

The present invention relates to a centrifugal juicer, prior art arrangements of which generally utilise a strainer basket of a frusto-conical shape, comprising a central metal grating disk and a frusto-conical filter mesh positioned above such. Such conventional grating disks normally have a straight blade fitted to the centre of the grating disk for grinding down the core of certain types of fruit, such as apples, and additionally, it is common to have spikes formed on the grating disk radiating from the centre, which are required for effective grinding/pulping of the fruit or vegetables. These spikes are usually formed by combination of lancing, punching and stamping of the sheet metal disk. A disadvantage of such a metal grating disk is that the spikes are sharp to the touch and thereby pose a safety problem, which can cause injury to the user during handling and cleaning, and further, such are difficult to clean, since foodstuffs can become lodged in crevices around the spikes and the central blade, which are thus hard to completely clean, which can pose a health risk due to bacterial growth, as well as potentially causing a bad smell, or taste, if such are not cleaned adequately after use.

It is the object of the invention to provide an improved centrifugal type of juicer which overcomes the disadvantages of prior art arrangements by utilising a non-metallic material for the grating disk and which avoid the disadvantages of prior art arrangements, being safe to handle and clean whilst avoiding the introduction of crevices or undercuts which may trap foodstuffs and thereby contaminate the device.

According to the present invention, there is provided a juicer for fruit and vegetables as set forth in the appended claims.

The present invention will now be described further, with reference to the drawings, in which:
Figure 1 illustrates an assembled juicer of the present invention;
Figure 2 illustrates a juicer of the invention in an exploded view;
Figure 3 is a cross-section of the juicer of Figure 1;
Figure 4 is an assembled and sectional view of the strainer basket and grating disk;
Figure 5 is an alternative embodiment of the invention;
Figure 6 illustrates in Figures 6a, 6b and 6c, respectively, a strainer basket assembly, a grater disk and a cross-sectional view of the juicer of Figure 5; and
Figure 7 illustrates an example of a strainer basket of a prior art juicer.

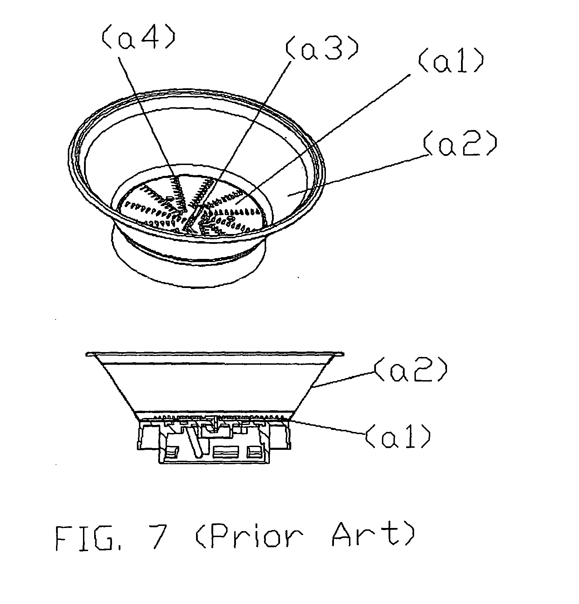

Referring now to the drawings, referring firstly to Figure 7, a conventional juicer basket is shown, which is frusto-conical in shape, having a central metal grating disk a1, from which extends a frusto-conical filter mesh basket a2. The metal grating disk a1 has a straight central blade a3 and an arrangement of radial spikes a4. The central blade a3 is provided to cut through and grind down the core of certain types of fruit, such as apples, whilst the spikes a4 tear and grind the flesh of the fruit or vegetables freeing the juice, which can then pass through the filter mesh, whilst the pulp is retained within the basket or flung, by centrifugal force, out of the top of the basket to be collected for disposal.

The problem with such type of strainer basket is that the spikes a4 and the central blade a3 are generally pressed or punched or stamped from the sheet metal of the grinding disk and have very sharp and, potentially dangerous, edges, which can cause injury when handling or cleaning the strainer basket. Further, due to the undercuts or crevices created by such a pressing/punching/stamping process, there are many areas where pulp can lodge, and if the basket is not cleaned thoroughly, after use, such can cause hygiene problems.

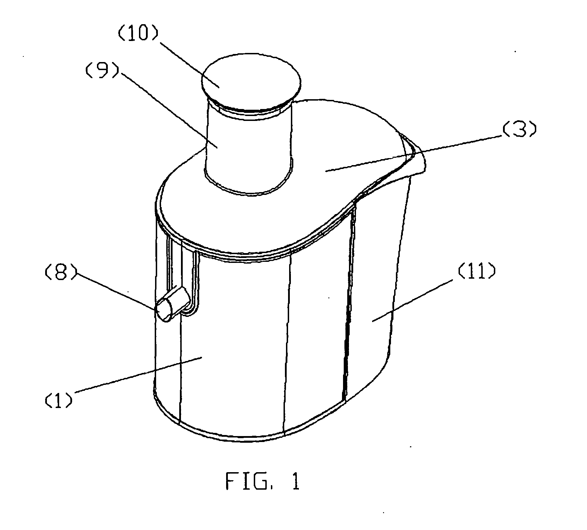

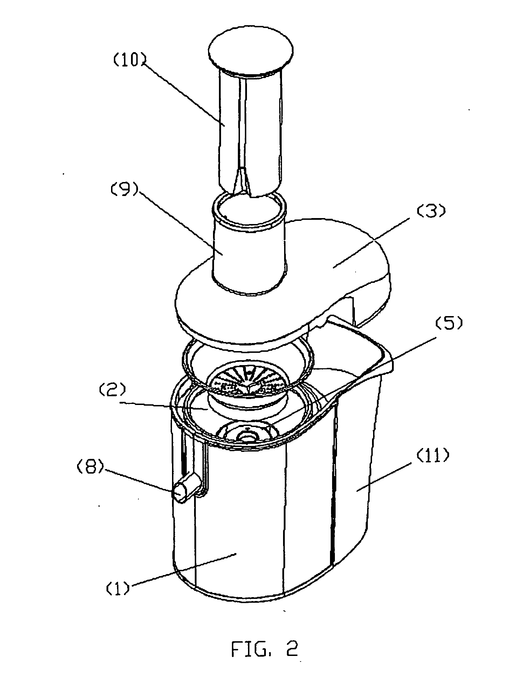

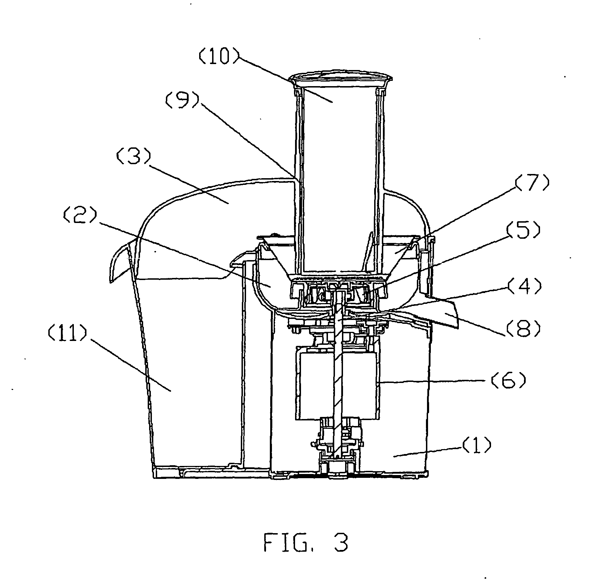

Referring now to the present invention, as illustrated in Figures 1, 2 and 3, the juicer of the present invention includes a housing comprising a base portion 1 and a cover portion 3. Within the housing 1, an upper support member 2 is provided which receives the grinding assembly.

In the lower portion of the base member 1, a motor 6 is located, from which the drive shaft 4 extends through the base of the support member 2 in a sealing manner, with the upper portion of the shaft 4 being attached to a coupling 5 which supports and receives a strainer basket assembly 7, the top edges of which extend above the upper edge of the support member 2. The support member 2 also includes a drain nozzle/spout 8 via which extracted juice can be poured and collected.

The top cover 3 includes a cylindrical hollow feed tube 9, which, when the cover is fitted onto the housing 1, is positioned concentrically in relation to the strainer basket assembly 7. A pusher 10 is provided, which can be inserted into the tube 9 to enable pressure to be applied upon fruit or vegetables inserted into the tube, to force such into engagement with the strainer basket assembly 7 for pulping. A pulp collector 11 is located at the rear of the housing to collect pulp thrown centrifugally from the strainer basket assembly 7, in use.

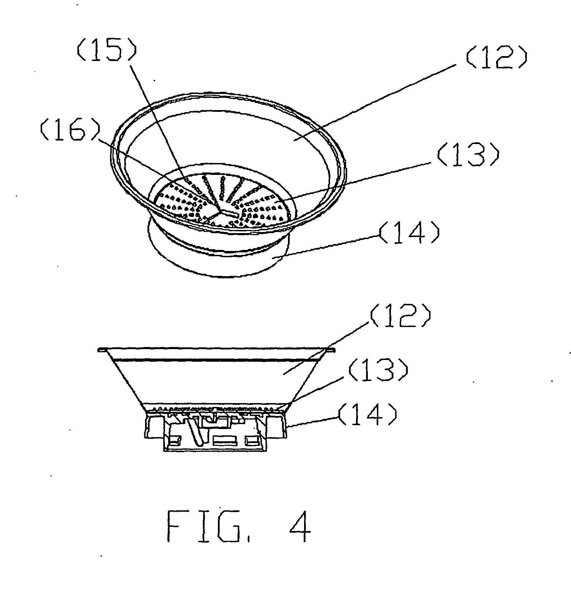

The strainer basket assembly 7 can be seen in more detail in Figure 4 and comprises a filter mesh 12 and a grating disk 13, which are mounted on top of a blade bracket 14. The grating disk 13 is made of a non-metallic material such as a ceramic material, e.g. aluminium oxide, having integral spikes 15 and centre ribs 16, appropriately positioned on the surface of the grating disk 13. The centre ribs 16 are short ribs formed at the centre part of the ceramic grating disk, whilst the integral spikes 15 are designed to form rows radiating from the disk centre. Such a ceramic grating disk 13 can be easily produced by a moulding process, so that such ribs 16 and spikes 15 are formed as protrusions on the upper surface of a solid ceramic disk and as such, do not have any undercuts or crevices which might trap or retain remnants of foodstuffs. When foodstuffs, e.g. fruit or vegetables, are fed into the juicer via the tube 9, the pusher 10 is used to push the foodstuffs onto the rapidly rotating ceramic grating disk 13, driven by motor 6 via shaft 4, which foodstuffs are then ground into a pulp by the disk 13 and, having been macerated/mashed, the foodstuff is filtered through the filter mesh 12 to produce juice that flows into the support member 2 and out of the juicer through the nozzle 8. Residual pulp from the mashed foodstuff is centrifugally thrown out of the filter mesh 12 and into the pulp collector 11.

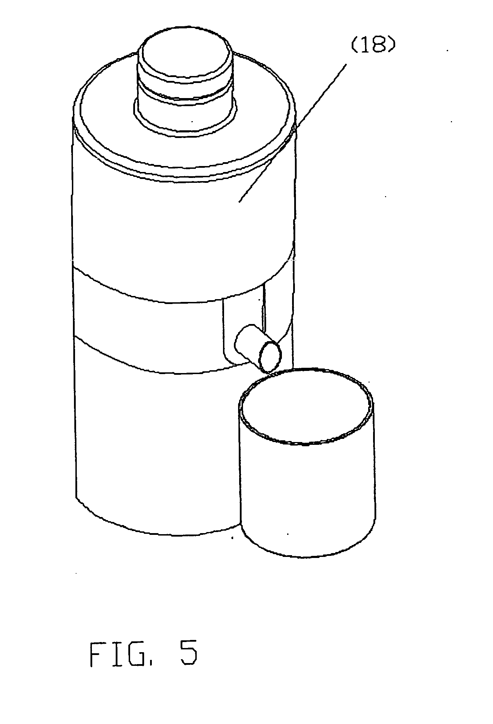

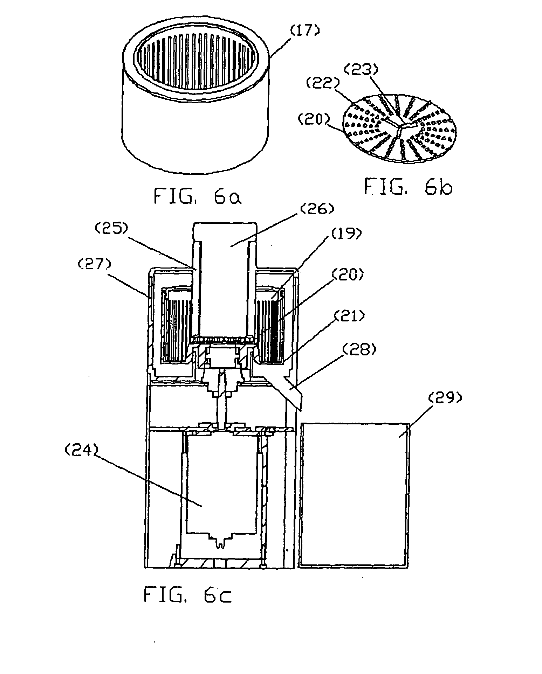

Referring now to Figure 5 and Figures 6a, 6b and 6c, an alternative embodiment is shown in which the housing is formed as a cylindrical housing, but here is not provided with a rear pulp collector, as in the first embodiment. As shown in Figure 6c, motor 24 is positioned within the lower portion of the housing 18, whilst in the upper portion, a cylindrical strainer basket assembly 17 is provided instead of the frusto-conical arrangement of the first embodiment. Here, the strainer basket assembly 17 comprises a filter basket 19, a cylindrical grating disk 20 and a bucket 21. The grating disk 20 is generally the same as that described previously in connection with the first embodiment and includes radial spikes 22 and centre ribs 23 moulded thereon.

As in the previous arrangement, wherein foodstuffs are fed into the feed tube 25, being pressed down with the pusher 26, the foodstuff is ground by the ceramic grating disk 20 and the pulp is collected within the filter basket whilst the juice flows out of the bucket 21 to an outer support member 27 which incorporates a nozzle 28 through which the juice can flow and be collected in a suitable container, e.g. juice cup 29.

With this arrangement, as before, the ceramic grating disk 20 improves the grinding action and is easy to clean, whilst the pulp is retained and collected in the strainer basket assembly 17, which, after removal of the top cover of the juicer 18, can be lifted out and emptied.

As mentioned previously, the ceramic grating disk 13, 20, being moulded, does not have any sharp edges or spikes and thereby minimises the risk of injury, whilst the ceramic material is chemically inert and does not react with the juices. The integral spikes and centre ribs on the disk incorporate no crevices or gaps that can collect foodstuffs and thereby are easier to clean and are more hygienic in use. Further, whilst the arrangement of central ribs and spikes shown is the preferred arrangement, other arrangements of such could also be utilised, if preferred.

## Claims

1. A juicer for producing juice from fruit and/or vegetables, comprising a housing having a base portion (1) and a cover portion (3), said cover portion (3) including a feed tube (9), a support member (2) being located within the housing (1) for receiving a strainer basket assembly (7), which is driven by a motor (6) mounted in the base portion (1) of the housing, said strainer basket assembly (7) being comprises of a grating disk (13, 20) and a filter mesh (12,19), **characterised in that** said grating disk is a solid ceramic disk, wherein the solid ceramic grating disk (13, 20) has spikes (15, 22) and central ribs (16, 23) integrally moulded, as protrusions, thereon.

2. A juicer as claimed in claim 1, wherein the spikes (15, 22) are arranged as a plurality of radial rows.

3. A juicer as claimed in claim 1 or 2, in which the spikes (15, 22) are formed as moulded protrusions on the grating disk (13, 20), having pointed tips for engaging fruit or vegetable foodstuffs.

## Patentansprüche

1. Entsafter zum Herstellen von Saft aus Obst und/oder Gemüsen, umfassend ein Gehäuse mit einem Unterteil (1) und einem Abdeckteil (3), wobei das Abdeckteil (3) ein Eingaberohr (9) beinhaltet, ein Stützelement (2) im Gehäuse (1) zum Aufnehmen einer Siebkorbanordnung (7) angeordnet ist, die von einem im Unterteil (1) des Gehäuses angebrachten Motor (6) angetrieben wird, wobei die Siebkorbanordnung (7) aus einer Reibscheibe (13, 20) und einem Filtergitter (12, 19) besteht, **dadurch gekennzeichnet, dass** die Reibscheibe eine feste Keramikscheibe ist, wobei die feste Keramikreibscheibe (13, 20) Zacken (15, 22) und mittige Rippen (16, 23) aufweist, die auf ihr einstückig als Vorsprünge ausgebildet sind.

2. Entsafter nach Anspruch 1, wobei die Zacken (15, 22) als mehrere radiale Reihen angeordnet sind.

3. Entsafter nach Anspruch 1 oder 2, wobei die Zacken (15, 22) als geformte Vorsprünge auf der Reibscheibe (13, 20) ausbebildet sind, die spitz zulaufende Spitzen aufweisen, um Obst- oder Gemüsenahrungsmittel zu erfassen.

## Revendications

1. Une centrifugeuse pour extraire le jus de fruits et/ou de légumes, se composant d'un boîtier ayant une base (1) et un couvercle (3), le couverte (3) comportant un tube d'alimentation (9), un élément de support (2) se trouvant dans le boîtier (1) pour recevoir un ensemble panier filtre (7), qui est entraînée par un moteur (6) monté dans la base (1) du boîtier, l'ensemble panier filtre (7) étant composé d'un disque rapeur (13, 20) et d'un filtre à mailles (12,19), **se caractérisant par le fait que** le disque rapeur est un disque en céramique massive et que le disque rapeur en céramique massive (13, 20) possède des pointes (15, 22) et des nervures centrales (16, 23) intégralement moulées et faisant saillie.

2. Une centrifugeuse selon la revendication 1, dans laquelle les pointes (15, 22) sont réparties sur plusieurs rangées radiales.

3. Une centrifugeuse selon la revendication 1 ou 2, dans laquelle les pointes (15, 22) sont des saillies moulées sur le disque rapeur (13, 20) ayant des bouts pointus destinés à entrer dans les fruits ou légumes.
